# EUROPÄISCHE PATENTSCHRIFT

(11) **EP 0 960 153 B1**
(45) Veröffentlichungstag und Bekanntmachung des Hinweises auf die Patenterteilung: **24.01.2001**
(21) Anmeldenummer: 98913705.4
(22) Anmeldetag: 12.03.1998
(51) Int. Cl.: C08G 77/382, C08G 77/392, C09B 69/10

(54) **FARBSTOFFRESTE AUFWEISENDE ORGANOPOLYSILOXANE**
ORGANOPOLYSILOXANES WHITH DYE RESIDUES
ORGANOPOLYSILOXANES PRESENTANT DES RESTES DE COLORANTS

(30) Priorität: 13.03.1997 DE 19710461
(43) Veröffentlichungstag der Anmeldung: 01.12.1999
(73) Patentinhaber: Wacker-Chemie GmbH, 81737 München (DE)
(72) Erfinder: BAUMANN, Frank, D-84561 Mehring (DE); MAHR, Guenter, D-84489 Burghausen (DE); DEUBZER, Bernward, D-84489 Burghausen (DE)
(74) Vertreter: Budczinski, Angelika
(86) Internationale Anmeldenummer: EP9801413
(87) Internationale Veröffentlichungsnummer: WO9840429

(56) Entgegenhaltungen:
- EP-A- 0 274 185
- EP-A- 0 283 206
- EP-A- 0 336 709
- EP-A- 0 455 384
- EP-A- 0 554 863
- GB-A- 2 018 804

## Beschreibung

Die Erfindung betrifft funktionalisierte Siliconverbindungen, an die zusätzlich farbgebende Moleküle kovalent angebunden sind, Verfahren zu ihrer Herstellung und die Verwendung dieser farbigen Siliconverbindungen.

Der gleichzeitige Einsatz von Siliconverbindungen und Farbstoffen ist aufgrund der nicht Mischbarkeit bzw. Unlöslichkeit der meisten Farbstoffe in Siliconverbindungen problematisch. Deshalb werden spezielle Abmischungen von Farbstoffen mit Silanen bzw. Siloxanen, wie beispielsweise in US-A 5,281,240 beschrieben, verwendet, um dieses Problem zu lösen. Eine weitere Möglichkeit diese Unverträglichkeit zu umgehen, ist die kovalente Anbindung von Farbstoffen an Silane, wie dies z.B. in J. Soc. Dyers and Col. 85, 1969, Nr.9, 401-4 beschrieben wird. In US-A 2,925,313 und US-A 4,403,099 sind Farbstoff tragende Siloxane beschrieben. Diese sind aber aufgrund ihrer Herstellungsverfahren, wie Azokupplung oder basischer Epoxydöffnung, auf nur eine Farbstoffklasse, wie anilinhaltigen Azoverbindungen, Nitrosubstituenten tragenden Aromaten bzw. nur auf epoxydfunktionalisierte Siloxane beschränkt. Weiterhin tragen diese Siloxane keine anderen funktionellen Gruppen in den Polymerketten. EP-A 336709 offenbart ein Organopolysiloxan, das aminofunktionelle Reste optischen Aufhellers enthält und zum Aufhellen von synthetischen Fasern und Papier geeignet ist.

Gegenstand der vorliegenden Erfindung sind Farbstoffreste aufweisende Organopolysiloxane enthaltend Einheiten der allgemeinen Formel

R¹ ₐ(RO)_{b}A_{c}R² _{d}SiO_{[4-a-b-c-d]/2} (I),

worin
R gleich oder verschieden sein kann und Wasserstoffatom oder einwertiger gegebenenfalls substituierter Kohlenwasserstoffrest bedeutet,
R¹ gleich oder verschieden sein kann und Wasserstoffatom oder einwertiger, SiC-gebundener Kohlenwasserstoffrest bedeutet,
R² gleich oder verschieden sein kann und substituierter einwertiger, SiC-gebundener Kohlenwasserstoffrest bedeutet,
A gleich oder verschieden sein kann und sulfonsäuren- und/oder sulfonatgruppenhaltiger, wasserlöslicher, organischer Farbstoffrest und/oder deren Komplexverbindung mit Metallen bedeutet,
a gleich 0, 1, 2 oder 3 ist,
b gleich 0, 1, 2 oder 3 ist,
d gleich 0, 1, 2 oder 3, bevorzugt 0 oder 1, ist und
c gleich 0, 1 oder 2, bevorzugt 0 oder 1, ist,
mit der Maßgabe, daß die Summe aus a, b, c und d kleiner oder gleich 3 ist, die Organopolysiloxane pro Molekül mindestens einen Rest A aufweisen und bei den Einheiten der Formel (I) mit c verschieden 0 d gleich 0 ist.

Der Begriff Organopolysiloxane soll im Rahmen der vorliegenden Erfindung sowohl polymere als auch dimere und oligomere Siloxane umfassen.

Bei Rest R¹ handelt es sich bevorzugt um Wasserstoffatom und Kohlenwasserstoffreste mit 1 bis 18 Kohlenstoffatomen, besonders bevorzugt um Kohlenwasserstoffreste mit 1 bis 6 Kohlenstoffatomen, insbesondere um den Methylrest.

Beispiele für Rest R¹ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Alkenylreste, wie der Vinyl-, Allyl-, 3-Butenyl-, 4-Pentenyl- und 5-Hexenylrest, Arylreste, wie der Phenyl-, Biphenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, sowie der α-und der β-Phenylethylrest.

Bei Rest R handelt es sich bevorzugt um Wasserstoffatom oder gegebenenfalls substituierte Alkylreste mit 1 bis 12 Kohlenstoffatomen, die mit Sauerstoffatomen unterbrochen sein können, besonders bevorzugt um Wasserstoffatom, den Methyl- und den Ethylrest.

Beispiele für Rest R sind die für R¹ angegebenen Beispiele.

Bei Rest R² handelt es sich bevorzugt um substituierte Kohlenwasserstoffreste mit 1 bis 18 Kohlenstoffatomen, besonders bevorzugt um Kohlenwasserstoffreste mit 1 bis 18 Kohlenstoffatomen, die mit Aminogruppen und/oder deren Derivaten, Mercaptogruppen sowie Carbonsäuregruppen und/oder deren Derivaten substituiert sind.

Beispiele für Rest R² sind mit Aminogruppen und deren Derivaten substituierte Kohlenwasserstoffreste, wie z.B. Aminopropyl-, Aminopropylaminoethyl-, Cyclohexylaminopropyl- oder acetylierte Aminopropylreste,
mit Mercaptogruppen substituierte Kohlenwasserstoffreste, wie z.B. der Mercapto-n-propylrest,
mit Epoxidgruppen substituierte Kohlenwasserstoffreste, wie z.B. Propylglycidetherrest,
mit Acrylat- bzw. Methacrylatgruppen substituierte Kohlenwasserstoffreste, wie z.B. n-Propylacrylsäure-Esterrest und n-Propyl-Methacrylsäure-Esterrest,
mit Carbonsäuregruppen bzw. deren Derivaten substituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, mit Estern, wie dem Undecensilylesterrest,
mit Aldehydgruppen substituierte Kohlenwasserstoffreste, wie z.B. Propionaldehydrest,
mit Hydroxylgruppen substituierte Kohlenwasserstoffreste, wie z.B. primäre, sekundäre und tertiäre Alkoholreste, wie der Propanolrest, der Butanolrest, oder aromatische Hydroxygruppen tragende Kohlenwasserstoffreste, wie der Phenolrest und der Eugenolrest,
mit Polyglykolgruppen substituierte Kohlenwasserstoffreste, wie z.B. Alkylpolyglykolreste, wie z.B. der Propylpolyglykolrest,
mit Phosphonatogruppen substituierte Kohlenwasserstoffreste, wie z.B. Phosphonatoalkylreste,
mit Silalactongruppen substituierte Kohlenwasserstoffreste,
mit Glycosidgruppen substituierte Kohlenwasserstoffreste, wie z.B. Reste der Formel Z-R³- mit Z gleich einem Glycosidrest, der aus 1 bis 10 Monosaccarideinheiten aufgebaut ist, und R³ gleich Alkylenrest oder Oxyalkylenrest, sowie die in EP-A-612 759, Seite 2, Zeile 11 bis Seite 3 bis Zeile 53 genannten Reste.

Bevorzugt handelt es sich bei Rest A um sulfonsäuregruppen- oder sulfonatgruppenhaltige, wasserlösliche, organische Farbstoffreste mit Azogruppen oder Chinongruppen und/oder deren Komplexverbindung mit Metallen.

Bei Rest A kann es sich um einwertige oder mehrwertige Reste handeln, so daß Rest A auch mehrere Sil(oxan)ylreste miteinander verknüpfen kann.

Beispiele für Reste A sind 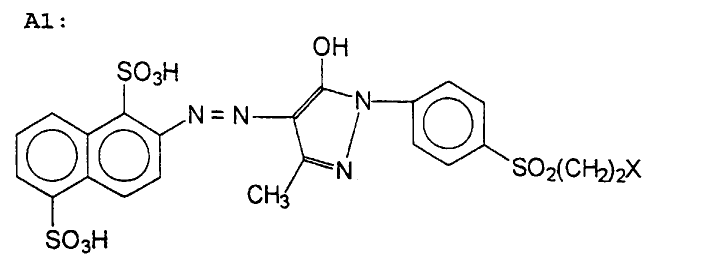 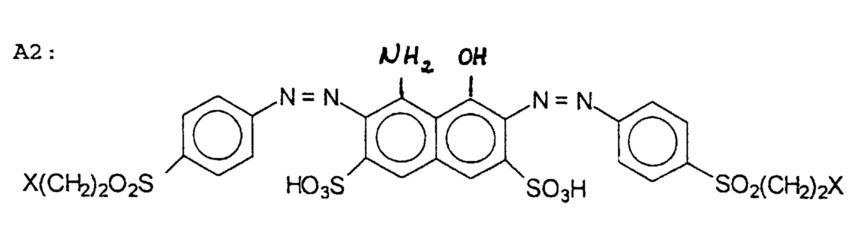 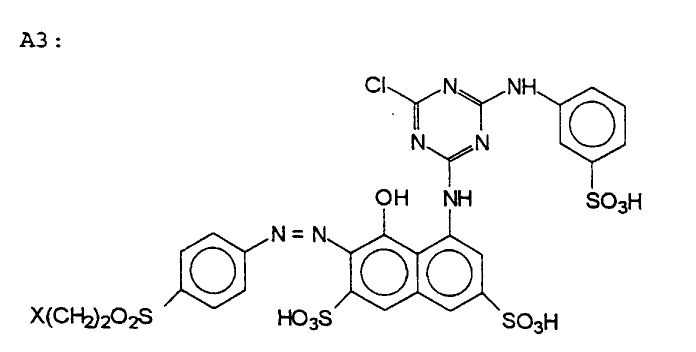 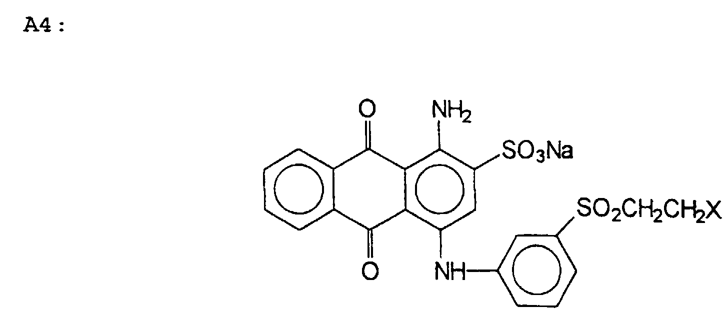 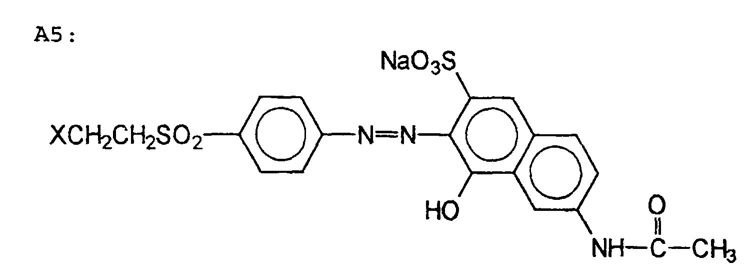 mit X gleich einem zweiwertigen Rest der Formel -YR⁴-, wobei Y einen Rest -O-, -S-, -NH- oder -NR⁵- bedeutet, R⁴ einen zweiwertigen gegebenenfalls substituierten Kohlenwasserstoffrest bedeutet und R⁵ einen einwertigen gegebenenfalls substituierten Kohlenwasserstoffrest bedeutet, mit der Maßgabe, daß in der erfindungsgemäßen Verbindung Y mit dem Farbstoffrest und R⁴ mit dem betreffenden Siliciumatom verbunden ist.

Vorzugsweise handelt es sich bei Rest R⁴ um zweiwertige gegebenenfalls substituierte lineare Kohlenwaserstoffreste mit 1 bis 30 Kohlenstoffatomen, die durch Heteroatome, wie Stickstoff, Schwefel oder Sauerstoff, unterbrochen sein können, wobei gegebenenfalls substituierte Alkylenreste mit 1 bis 10 Kohlenstoffatomen besonders bevorzugt sind, wie z.B. Methylen-, Ethylen-, Propylen- und Butylenrest, Aminopropylaminoethylrest, Ethylenoxidrest sowie mit maximal 4 Zuckerresten substituierte Alkylengruppen.

Bevorzugt handelt es sich bei Rest R⁵ um einwertige, gegebenenfalls substituierte Kohlenwasserstoffreste, wobei gegebenenfalls substituierte Alkylreste mit 1 bis 10 Kohlenstoffatomen besonders bevorzugt sind.

Beispiele für R⁵ sind der Methyl-, Ethyl-, Propyl-, Butyl-, Cyclohexyl-, Phenyl- und Benzylrest.

Zur Herstellung der erfindungsgemäßen Organopolysiloxane werden bevorzugt Azo- oder Chinoinfarbstoffe, die über eine oder mehrere, gleiche oder verschiedene reaktive Gruppen verfügen, eingesetzt.

Beispiele für solche reaktiven Gruppen, die an die Farbstoffmoleküle angebunden sein können, sind Reste der Formel
-SO₂-(CH₂)₂-V, wobei V die Bedeutung von Halogen-, Sulfato- oder Thiosulfatorest hat,
oder Triazinreste, wie z.B. solche der Formel (III) 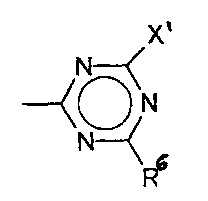 wobei X` für Halogenrest, wie Fluor-, Chlor- oder Brom-, insbesondere Chlorrest, steht und R⁶ Wasserstoffatom oder organischen Rest bedeutet.

Beispiele für die erfindungsgemäß eingesetzten Farbstoffmoleküle sind:

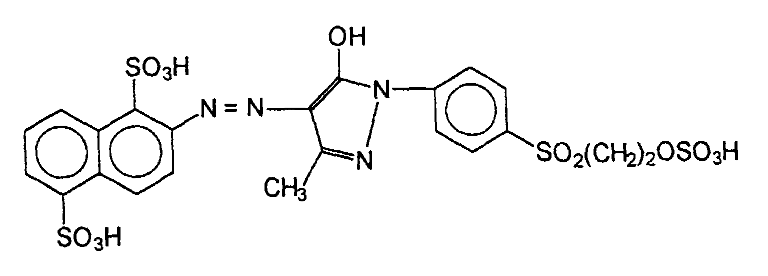

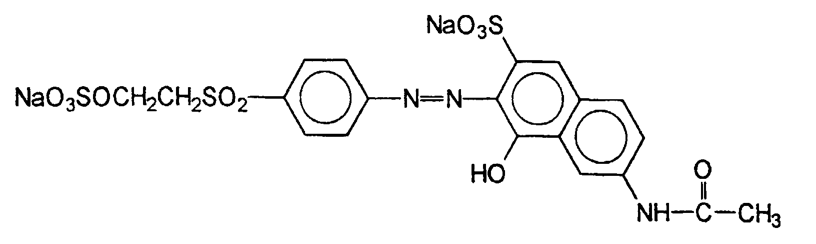

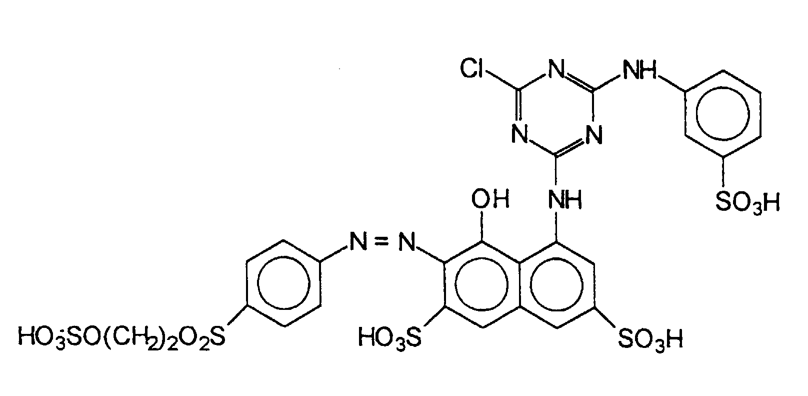

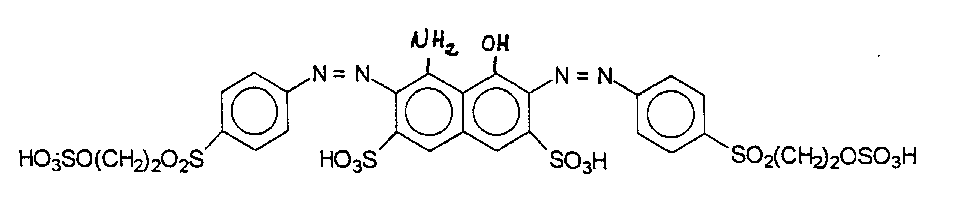

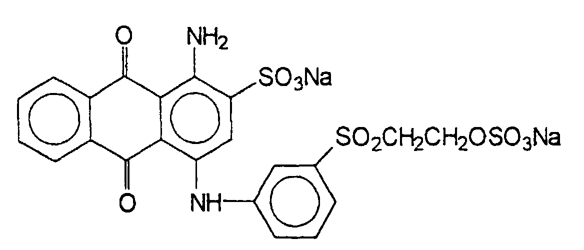

Bei den erfindungsgemäß eingesetzten Farbstoffen handelt es sich um handelsübliche Produkte bzw. sind nach in der organischen Chemie gängigen Methoden herstellbar. Beispielsweise sind die als konkrete Beispiele genannten Farbstoffe käuflich erhältlich bei der Firma DYE Stars Darmstadt (Remazol®-Reihe) oder der Firma Reactasil.

Bevorzugt handelt es sich bei den erfindungsgemäßen Organopolysiloxanen um solche, die aus Einheiten der Formel (I) bestehen, wobei in bevorzugt mindestens 50 %, besonders bevorzugt in mindestens 80 %, insbesondere in mindestens 90 %, aller Siloxaneinheiten die Summe aus a+b+c+d gleich 2 ist, jeweils mit der Maßgabe, daß pro Molekül mindestens ein Rest A anwesend ist und bei Einheiten der Formel (I) mit c verschieden 0 d gleich 0 ist.

Besonders bevorzugt handelt es sich bei den erfindungsgemäßen Organopolysiloxanen um solche der Formel (II)

R¹ ₃SiO(SiA₂O)ₑ(SiR¹ _{f}R² _{2-f}O)_{g}(R² ₘR¹ ₂₋ₘSiO)ₕ(R¹ ⱼAR² ₁₋ⱼSiO)ₖSiR¹ ₃

wobei
R¹, R² und A die oben angegebene Bedeutung haben,
f gleich 0 oder 1 ist, bevorzugt 1
j gleich 0 oder 1 ist, bevorzugt 1
m gleich 0, 1 oder 2, bevorzugt 0,
e gleich 0 oder eine ganze Zahl von 1 bis 100 ist,
g gleich 0 oder eine ganze Zahl von 1 bis 100 ist,
h gleich 0 oder eine ganze Zahl von 1 bis 1000 ist und
k gleich eine ganze Zahl von 1 bis 100 ist,
mit der Maßgabe, daß (e+g)<(h+k)/10 ist und die in Formel (II) angegebenen Einheiten statistisch im Siloxanmolekül verteilt sein können.

Die Viskositäten der erfindungsgemäßen Organopolysiloxane reichen von bevorzugt 100 mm²/s bis hin zu bei Raumtemperatur festen wachsartigen Substanzen. Besonders bevorzugt ist dabei der Viskositätsbereich zwischen 1 000 mm²/s und 20 000 mm²/s sowie der Bereich der bei Raumtemperatur wachsartig festen Organopolysiloxane.

Der Farbstoffgehalt der erfindungsgemäßen Organopolysiloxane beträgt bevorzugt 0,1 bis 80 Gewichtsprozent (bezogen auf das Gesamtgewicht), besonders bevorzugt 1 bis 15 Gewichtsprozent, insbesondere 5 bis 10 Gewichtsprozent.

Beispiele für die erfindungsgemäßen Organopolysiloxane sind, wobei Me gleich Methylrest ist:

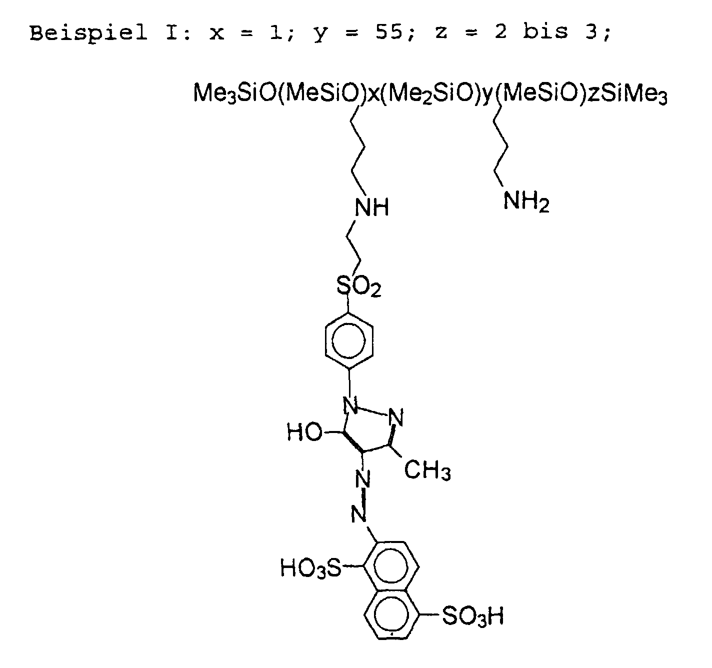

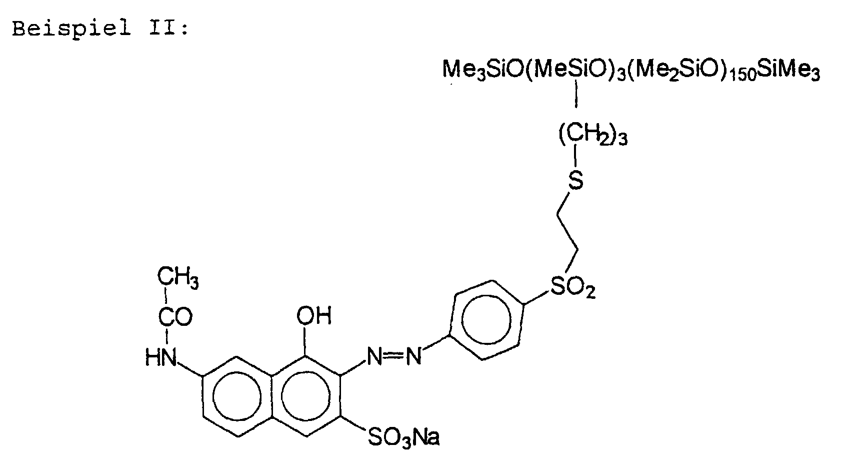

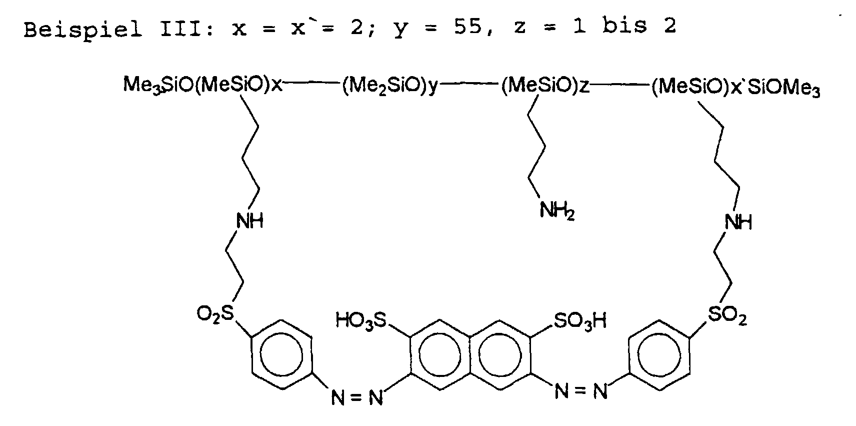

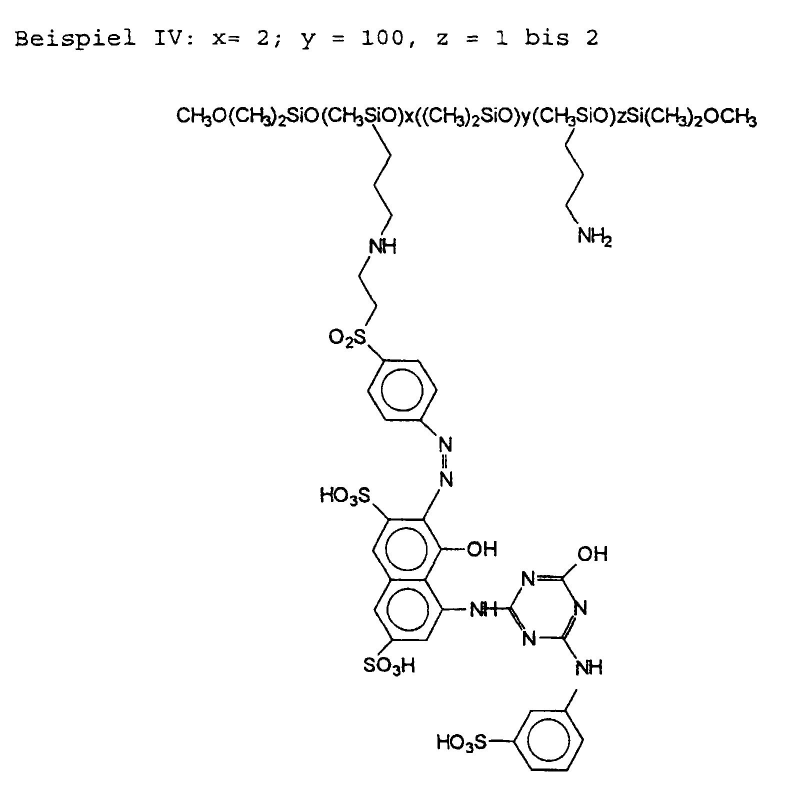

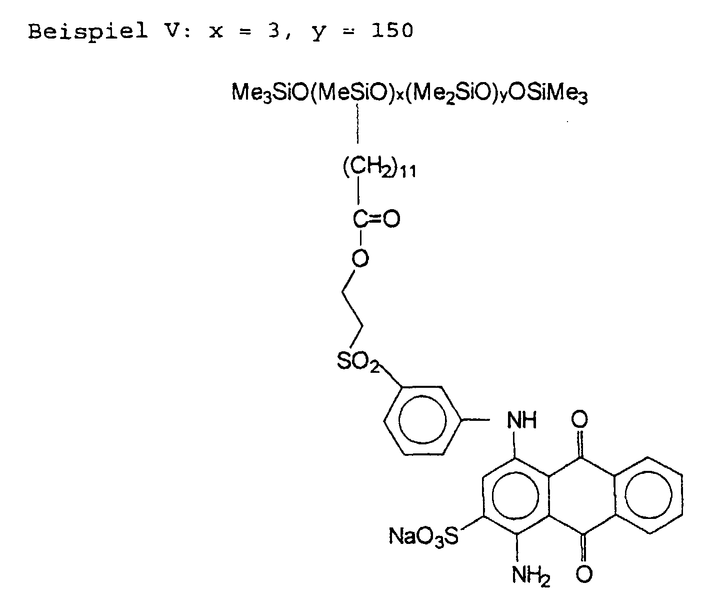

Die erfindungsgemäßen farbigen Organopolysiloxane haben den Vorteil, daß sie außer den kovalent gebundenen Farbstoffresten noch weitere funktionelle Gruppen aufweisen können, die der Verbindung zusätzlich zur Farbe noch weitere Eigenschaften, wie z.B. Substantivität und Hydrophobie, verleihen können.

Die erfindungsgemäßen farbigen Organopolysiloxane haben des weiteren den Vorteil, daß sie stabil sind, d.h. bei Raumtemperatur und unter dem Druck der umgebenden Atmosphäre für mindestens 1 Jahr stabil sind.

Ein weiterer Vorteil der erfindungsgemäßen farbigen Organopolysiloxane besteht darin, daß hydrophobe Systeme, wie etwa Siliconkautschukmassen, auf sehr einfache Art und Weise eingefärbt werden können.

Die erfindungsgemäßen farbigen Organopolysiloxane enthaltend Einheiten der allgemeinen Formel (I) können nun jeweils abhängig von den funktionellen Gruppen der Farbstoffmoleküle auf verschiedene Art und Weise hergestellt werden.

Die Synthese der erfindungsgemäßen farbigen Organopolysiloxane beruht insbesondere auf der Reaktion der kovalent an das Farbstoffmolekül angebundenen reaktiven Gruppen, ausgewählt aus der Gruppe bestehend aus halogenierten Triazinresten, wie z.B. solchen der Formel (III), oder Resten der Formel -SO₂-(CH₂)₂-V mit V gleich der obengenannten Bedeutung sowie deren während der Reaktion gegebenenfalls entstehenden Zwischenprodukte, wie z.B. -SO₂-CH=CH₂, mit den für eine Umsetzung geeigneten funktionellen Gruppen der erfindungsgemäß eingesetzten Organopolysiloxane, wie etwa Aminoalkylreste, Carbonsäurereste oder Mercaptanreste.

Ein weiterer Gegenstand der vorliegenden Erfindung ist ein Verfahren zur Herstellung von Farbstoffreste aufweisenden Organopolysiloxanen, dadurch gekennzeichnet, daß sulfonsäuren- und/oder sulfonatgruppenhaltige, wasserlösliche, organische Farbstoffe und/oder deren Komplexverbindung mit Metallen mit kovalent an das Farbstoffmolekül angebundenen reaktiven Gruppen, ausgewählt aus der Gruppe bestehend aus halogenierten Triazinresten oder Resten der Formel -SO₂-(CH₂)₂-V mit V gleich der obengenannten Bedeutung sowie deren während der Reaktion gegebenenfalls entstehenden Zwischenprodukte mit Amino-, Carboxy-, Mercapto-, Anhydrid-, prim-, sek-, tert-Carbinol-, Glycosido-, Phenol-, Epoxid-, Aldehyd-, Polyglykol-, Phosphonato-, Silalacton-, Acrylat- und/oder Methacrylatgruppen aufweisenden Organopolysiloxanen umgesetzt werden.

Beispiele für die im erfindungsgemäßen Verfahren eingesetzten Farbstoffe sind bereits oben angegeben.

Bei den erfindungsgemäß eingesetzten Organopolysiloxanen kann es sich um beliebige auch bisher bekannte Organopolysiloxane handeln, wie etwa solche aus Einheiten der Formel

R¹ ₐ(RO)_{b}R`_{c`}R² _{d}SiO_{(4-a-b-c-d)/2} (I`)

worin R, R¹, R², a, b und d die oben dafür angegebene Bedeutung haben, R` gleich oder verschieden sein kann und einen Amino-, Carboxy-, Mercapto-, Anhydrid-, prim-, sek-, tert-Carbinol-, Glycosido-, Phenol-, Epoxid-, Aldehyd-, Polyglykol-, Phosphonato-, Silalacton-, Acrylat- oder Methacrylatrest bedeutet und c` eine für c angegebene Bedeutung hat,
mit der Maßgabe, daß die Summe aus a, b, c` und d kleiner oder gleich 3 ist, die Organopolysiloxane pro Molekül mindestens einen Rest R` aufweisen und bei den Einheiten der Formel (I`) mit c` verschieden 0 d gleich 0 ist.

Beispiele für Reste R` sind die für den Rest R² oben genannten Reste, wobei mit Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten substituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, bevorzugt und mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der erfindungsgemäß eingesetzten Organopolysiloxane handelt es sich selbstverständlich um analoge Strukturen wie oben bereits im Zusammenhang mit den erfindungsgemäßen Organopolysiloxanen beschrieben.

Die erfindungsgemäß eingesetzten Organopolysiloxane haben eine Viskosität von vorzugsweise 50 bis 50 000 mm²/s, besonders bevorzugt 200 bis 15 000 mm²/s, jeweils bei 25°C.

Bei den erfindungsgemäß besonders bevorzugt eingesetzten Organopolysiloxanen handelt es sich insbesondere um solche mit einer Aminzahl von 0,01 bis 10,0, wobei die Aminzahl der Anzahl der ml 1-n-HCl, die zum Neutralisieren von 1 g Substanz erforderlich sind, entspricht.

Die erfindungsgemäß eingesetzten Organosiliciumverbindungen sind handelsübliche Produkte bzw. können nach in der Siliciumchemie gängigen Methoden hergestellt werden.

Grundsätzlich kann es sich bei der erfindungsgemäßen Umsetzung um eine nucleophile Additionsreaktion, nucleophile Substitution am aromatischen Heterocyclus und um die Sulfoimidbildung handeln, was an den folgenden Beispielen konkretisiert werden soll:
1) Nucleophile Additionsreaktion 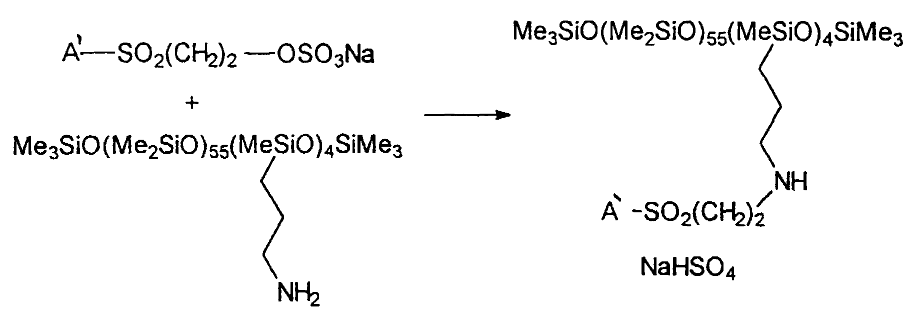 wobei A` die Bedeutung von farbgebendem Molekülteil hat und Me gleich Methylrest bedeutet.
2) Nucleophile Substitution am aromatischen Heterocyclus 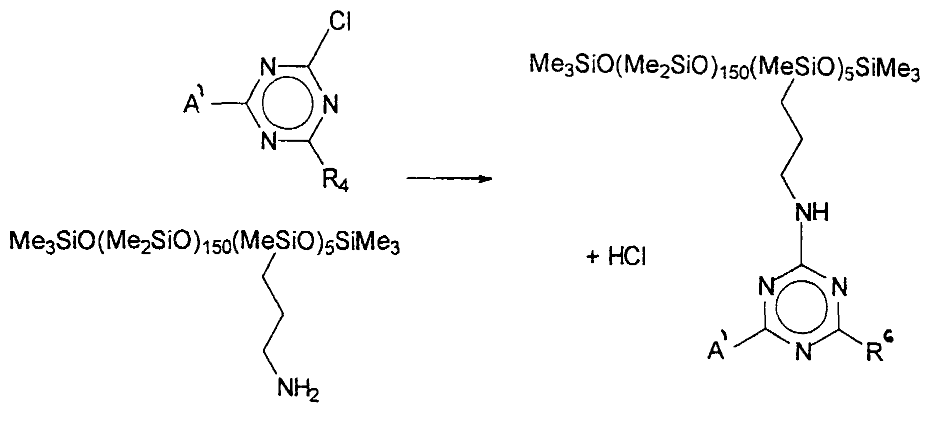 wobei A' die Bedeutung von farbgebendem Molekülteil hat, R⁶ die obengenannte Bedeutung hat und Me gleich Methylrest bedeutet.
3) Sulfoimidbildung 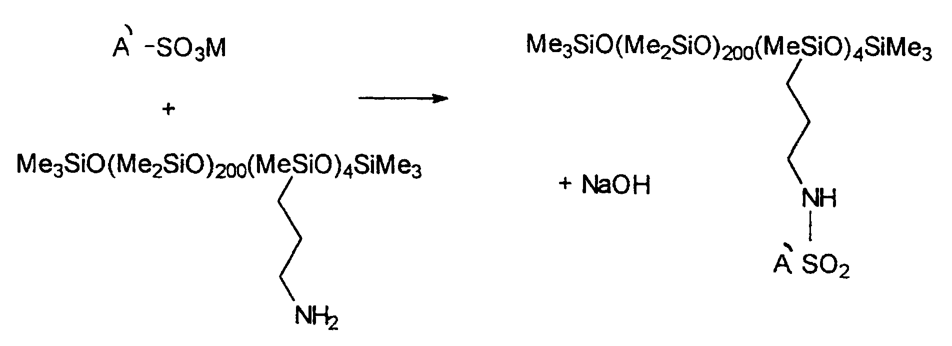 wobei A` die obengenannte Bedeutung hat und Me gleich Methylrest bedeutet.

Bei der erfindungsgemäßen Umsetzung wird Farbstoff in Mengen von vorzugsweise 0,1 bis 80 Gewichtsprozent, besonders bevorzugt 0,1 bis 10 Gewichtsprozent, insbesondere 2 bis 5 Gewichtsprozent, jeweils bezogen auf das Gesamtgewicht an eingesetztem Organopolysiloxan, verwendet, wobei die molare Farbstoffmenge maximal 95 mol-% der oben beschriebenen funktionellen Gruppen im erfindungsgemäß eingesetzten Organopolysiloxan betragen darf.

Die erfindungsgemäße Umsetzung kann in An- oder Abwesenheit von Katalysatoren durchgeführt werden, wobei ersteres bevorzugt ist.

Falls Katalysator eingesetzt wird, kann es sich um saure wie auch um basische Katalysatoren handeln, wobei saure Katalysatoren bevorzugt sind.

Beispiele für Basen, die als Katalysator bei der erfindungsgemäßen Umsetzung eingesetzt werden können, sind primäre und sekundäre Amine, Alkalimetallalkoxide in wäßriger Lösung und Erdalkalimetallhydroxide und -oxide in wäßriger Lösung.

Beispiele für Säuren, die als Katalysator bei der erfindungsgemäßen Umsetzung eingesetzt werden können, sind Mineralsäuren und Carbonsäuren, bevorzugt Carbonsäuren mit C₀ bis C₆-Alkylrest, besonders bevorzugt die Ameisensäure und die Essigsäure.

Die Säuren können in Substanz oder in Lösung eingesetzt werden. Falls sie in Lösung eingesetzt werden, handelt es sich besonders bevorzugt um Wasser als Lösungsmittel.

Der Katalysator kann auch kovalent an das erfindungsgemäß eingesetzte Organopolysiloxan angebunden sein, wie Carbonsäuren oder Carbonsäureanhydride, hierbei besonders bevorzugt ist das Bernsteinsäureanhydrid. Der saure, an das Organopolysiloxan kovalent angebundene Katalysator kann auch zugleich Reaktionspartner des Reaktivfarbstoffes sein, wie z. B. Carbonsäuren oder deren Anhydride, wie z.B. das Bernsteinsäureanhydrid.

Falls bei der erfindungsgemäßen Umsetzung Katalysator eingesetzt wird, handelt es sich um Mengen von bevorzugt 0,1 bis 1 Gewichtsprozent, bezogen auf das Gesamtgewicht der Edukte.

Die erfindungsgemäße Umsetzung kann nun als Ein-Phasen-Reaktion oder als Zwei-Phasen-Reaktion durchgeführt werden, wobei es sich bei letzterem auch um Emulsionen handeln kann.

### Verfahren A:

### Zwei-Phasen-Reaktion mit mechanischem Energieeintrag zur Homogenisierung

Dabei erfolgt die Umsetzung von Farbstoff mit Organopolysiloxan unter Verwendung von nicht mischbaren Lösungsmitteln für eine oder beide Reaktanten, so daß zwei Phasen entstehen, mittels geeigneter Durchmischungsmethoden ohne Katalysator oder mit basischer oder saurer Katalyse, besonders bevorzugt ist die saure Katalyse.

Die erfindungsgemäße Umsetzung gemäß Verfahren A wird bei einer Temperatur von bevorzugt 0 bis 200°C, besonders bevorzugt 50 bis 160°C, insbesondere 80 bis 130°C, und bevorzugt bei einem Druck der umgebenden Atmosphäre, also bei 900 bis 1100 hPa, durchgeführt. Die Reaktionszeiten liegen bevorzugt zwischen 5 Minuten und 2 Stunden, besonders bevorzugt zwischen 5 und 15 Minuten.

Geeignete Lösungsmittel für den erfindungsgemäß eingesetzten Farbstoff, die gegenüber den reaktiven Gruppen des Farbstoffs inert sind, sind organische aprotische Lösungsmittel, Wasser, wäßrige Elektrolytlösungen, wäßrige Laugen, wäßrige Säuren oder organisch-wäßrige Mischungen aus den oben genannten aprotischen, organischen Lösungsmitteln mit wäßrigen Systemen.

Bevorzugte aprotische, organische Lösemittel sind Dimethylformamid und Dimethylsulfoxid.

Bevorzugte wäßrige Systeme sind, wäßrige Laugen und wäßrige Säuren, besonders bevorzugt sind dabei wäßrige Säuren.

Bei dem Lösungsmittel, in dem der erfindungsgemäß eingesetzte Farbstoff gelöst wird, handelt es sich bevorzugt um Wasser, wäßrige Laugen und wäßrige Säuren, wobei wäßrige Säuren, wie z.B. eine wäßrige 1-30 Gew.-%ige Ameisensäurelösung, besonders bevorzugt sind.

Geeignete Lösungsmittel für das erfindungsgemäß eingesetzte Organopolysiloxan sind gegenüber den Reaktanten inerte, organische, aprotische Lösungsmittel, wie Toluol, Hexan, Cyclohexan oder dimere, oligomere oder polymere Siloxane, wie Hexamethyldisiloxan, die nicht mit dem Lösungsmittel oder dem Lösungsmittelgemisch des erfindungsgemäß eingesetzten Reaktivfarbstoffs mischbar sind.

Im Rahmen der vorliegenden Erfindung soll unter dem Begriff Nicht-Mischbarkeit von Lösungsmitteln eine Mischbarkeit bis maximal 1 Gew.-% bei 25°C und dem Druck der umgebenden Atmosphäre verstanden werden.

Bei dem erfindungsgemäßen Verfahren A können alle bekannten, auch kontinuierliche, Durchmischungsmethoden angewandt werden, die die beiden nicht mischbaren Phasen möglichst homogenisieren und somit eine große innere Reaktionsfläche schaffen. Geeignete Methoden zur Dispersion der Phasen sind dabei Rührwerke aller Art, bevorzugt Ultraschallsonden oder -bäder und Hochgeschwindigkeitsrührwerke, wobei Hochgeschwindigkeitsr|hrwerke, wie z.B. Ultra-Turrax-Rührer (Janke & Kunnel, IKA® Labortechnik, Ultra-Turrax T50 (1100 W 10 000 min⁻¹) besonders bevorzugt sind.

Das erfindungsgemäße Verfahren A hat den Vorteil, daß die erfindungsgemäß erhaltenen farbigen Örganopolysiloxane nicht mehr aufgearbeitet werden müssen. Des weiteren hat das Verfahren A den Vorteil, daß es ohne Lösungsvermittler, wie primären Alkohol, und ohne oberflächenaktive Substanzen, wie Tenside, durchgeführt werden kann.

### Verfahren B

### Zwei-Phasen-Reaktion mit Umsetzungen von Dispersionen, wie Emulsionen oder Mikroemulsionen

Die Umsetzung der Ausgangsverbindungen zu den erfindungsgemäßen Organopolysiloxanen kann auch in Emulsion oder Mikroemulsion durchgeführt werden, wobei das erfindungsgemäß eingesetzte Organopolysiloxan die dispergierte Phase in der wäßrigen Flotte ist und durch bekannte Art und Weise, wie etwa durch geeignete Emulgatoren, stabilisiert wird. Der erfindungsgemäß eingesetzte Reaktivfarbstoff wird in einem geeigneten Lösemittel gelöst, bevorzugt Wasser oder wäßrige, verdünnte Elektrolytlösungen, und zu der Dispersion gegeben oder umgekehrt. Die Reaktion verläuft ebenfalls wahlweise ohne Katalysator, oder unter basischer oder saurer Katalyse. Für die Katalysatoren gilt das oben gesagte.

Die erfindungsgemäße Umsetzung gemäß Verfahren B wird bei einer Temperatur von bevorzugt 0 bis 100°C, besonders bevorzugt bei 10 bis 50°C, insbesondere bei 20 bis 35°C, und bevorzugt bei einem Druck der umgebenden Atmosphäre, also bei 900 bis 1100 hPa, durchgeführt. Die Reaktionszeiten liegen bevorzugt zwischen einer und 200 Stunden, wobei die Dispersion durchmischt werden kann.

Die das erfindungsgemäß eingesetzte Organopolysiloxan enthaltende Dispersion kann nach beliebiger und bisher bekannter Art und Weise hergestellt werden. Dabei können beispielsweise alle Emulgatoren verwendet werden, die auch bisher zur Herstellung von Dispersionen verwendet worden sind, wie etwa nichtionische, anionische, kationisch oder amphotere Emulgatoren.

Die erfindungsgemäß eingesetzten Dispersionen haben einen Siloxananteil von bevorzugt 1 bis 30 Gewichtsprozent. Als dispergierte Siloxanphase eignen sich insbesondere erfindungsgemäß eingesetzte Aminoalkylgruppen aufweisende Organosiloxanöle mit einer Viskosität zwischen 100 und 10000 mm²/s und einer Aminzahl zwischen 0,2 und 2.

Nach Beendigung der Umsetzung kann die Aufarbeitung der die erfindungsgemäßen Organopolysiloxane enthaltenden Dispersion nach an sich bekannten Methoden erfolgen, wie z.B. durch das Brechen der Dispersion mit konzentrierten Elektrolytlösungen oder durch Zugabe von wasserlöslichen, polaren Lösungsmitteln, wie Aceton. Vorzugsweise wird dann die Ölphase abgetrennt und anschließend aufgereinigt durch mehrmaliges Ausschütteln mit konzentrierten Elektrolytlösungen, wie z.B. mit 20 Gew.-%iger Natriumchloridlösung. Die so erhaltenen erfindungsgemäßen Organopolysiloxane werden dann bevorzugt getrocknet.

Falls jedoch die erfindungsgemäßen Dispersionen direkt weiterverwendet werden sollen, kann die Aufarbeitung selbstverständlich entfallen.

Durch einfaches Abmischen von erfindungsgemäßen, verschiedenfarbigen Dispersionen können sehr einfach beliebige Farben eingestellt werden.

Das erfindungsgemäße Verfahren B hat den Vorteil, daß die erfindungsgemäß hergestellten farbigen Organopolysiloxane direkt in Form von Emulsionen anfallen und als solche direkt, je nach Verwendungszweck, appliziert werden können.

### Verfahren C

### Ein-Phasen-Reaktion

Die erfindungsgemäße Umsetzung der Ausgangsverbindungen zu den erfindungsgemäßen farbigen Organopolysiloxanen kann auch homogen geführt werden. Dabei werden der erfindungsgemäß eingesetzte Reaktivfarbstoff und das erfindungsgemäß eingesetzte Organopolysiloxan in einem gemeinsamen, gegenüber den Reaktanten inerten, aprotischen organischen Lösungsmittel oder in wäßrig-organischen Lösemittelgemischen, bevorzugt in Dimethylformamid und Dimethylsulfoxid, besonders bevorzugt Dimethylsulfoxid, gelöst. Die Reaktion verläuft ebenfalls wahlweise ohne Katalysator, oder unter basischer oder saurer Katalyse, wie oben bereits beschrieben.

Die erfindungsgemäße Umsetzung gemäß Verfahren C wird bei einer Temperatur von bevorzugt 5 bis 100°C, besonders bevorzugt bei 60 bis 80°C, und bevorzugt bei einem Druck der umgebenden Atmosphäre, also bei 900 bis 1100 hPa, durchgeführt. Die Reaktionszeiten liegen bevorzugt bei 15 bis 300 Minuten.

Die erfindungsgemäßen farbigen Organopolysiloxane können dann z.B. durch einfaches Abdestillieren des Lösungsmittels oder des Lösungsmittelgemisches isoliert werden.

Das erfindungsgemäße Verfahren C hat den Vorteil, daß es auf einfache Art und Weise mit einfachen Apparaturen durchgeführt werden kann.

Alle erfindungsgemäßen Verfahren haben den Vorteil, daß die erfindungsgemäßen Organopolysiloxane auf einfache Weise, reproduzierbar und mit sehr guter Ausbeute, vorzugsweise von 90 bis 99%, hergestellt werden können.

Die erfindungsgemäßen Organopolysiloxane werden bevorzugt nach Verfahren A oder B, besonders bevorzugt nach Verfahren A, jeweils gegebenenfalls in Kombination mit einem Equilibrierungsschritt, hergestellt.

Falls erwünscht, können die nach den erfindungsgemäßen Verfahren erhaltenen Farbstoffreste aufweisenden Organosiloxane mit Organopolysiloxanen (1), bevorzugt ausgewählt aus der Gruppe, bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, wodurch beispielsweise die Einstellung des gewünschten Molekulargewichts sowie die gezielte Verteilung der Farbstoffgruppen im Molekül und gegebenenfalls die Einführung weiterer Funktionalitäten ermöglicht wird.

Vorzugsweise werden als lineare, endständige Triorganosiloxygruppen aufweisende Organopolysiloxane solche der Formel

R⁷ ₃SiO(SiR⁷ ₂O)ᵤSiR⁷ ₃ (III),

als lineare, endständige Hydroxylgruppen aufweisende Organopolysiloxane solche der Formel

HO(SiR⁷ ₂O)ᵥH (IV),

als cyclische Organopolysiloxane solche der Formel

(SiR⁷ ₂O)ₜ (V),

und als Mischpolymerisate solche aus Einheiten der Formel

R⁷ ₃SiO_{1/2}, R⁷ ₂SiO und R⁷SiO_{3/2}

eingesetzt, wobei
R⁷ jeweils gleich oder verschieden sein kann und eine für R angegebene Bedeutung hat,
u 0 oder eine ganze Zahl von 1 bis 1500 ist,
v 0 oder eine ganze Zahl von 1 bis 1500 ist und
t eine ganze Zahl im Wert von 3 bis 12 ist.

Die Mengenverhältnisse der bei der gegebenenfalls durchgeführten Equilibrierung eingesetzten Organopolysiloxane (1) und erfindungsgemäß hergestellten Farbstoffgruppen aufweisenden Organopolysiloxane werden lediglich durch den gewünschten Anteil der Farbstoffgruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise basische Katalysatoren, welche die Equilibrierung fördern, eingesetzt. Beispiele für solche Katalysatoren sind Benzyltrimethylammoniumhydroxid, Tetramethylammoniumhydroxid, Alkalihydroxid und Erdalkalihydroxid in methanolischer Lösung sowie Silanolate. Bevorzugt sind hierbei Alkalihydroxide, welche in Mengen von vorzugsweise 50 bis 10 000 Gew.-ppm (Teile je Million), insbesondere 500 bis 2000 Gew.-ppm, jeweils bezogen auf das Gesamtgewicht der eingesetzten Organosiliciumverbindungen, verwendet wird.

Die gegebenenfalls durchgeführte Equilibrierung wird vorzugsweise bei 50 bis 150°C, besonders bevorzugt 70 bis 120°C, insbesondere 80 bis 100°C, und bevorzugt beim Druck der umgebenden Atmosphäre, also zwischen 900 und 1100 hPa, durchgeführt. Es kann aber auch bei höheren oder niedrigeren Drücken durchgeführt werden.

Das Equilibrieren kann, falls erwünscht, in mit Wasser nicht mischbarem Lösungsmittel, wie Toluol, durchgeführt werden, was jedoch nicht bevorzugt ist. Falls solche organischen Lösungsmittel jedoch eingesetzt werden, sind Mengen von 5 bis 20 Gewichtsprozent, bezogen auf das Gesamtgewicht der eingesetzten Organosiliciumverbindungen, bevorzugt.

Vor dem Aufarbeiten des bei dem erfindungsgemäßen Equilibrieren erhaltenen Gemisches kann der Katalysator unwirksam gemacht werden.

Die erfindungsgemäßen Organopolysiloxane mit kovalent angebundenen Farbstoffmolekülen in Substanz, in Lösung oder in Form von Dispersionen können überall dort eingesetzt werden, wo zugleich die Eigenschaften von Organopolysiloxanen, wie z.B. Hydrophobierung, Schmutzabweisung, Schutz, Weichgriff usw., kombiniert mit Farbgebung gefordert sind, wie beispielsweise im Bereich der kosmetischen Anwendungen, insbesondere bei der Haarpflege, beim Ausrüsten, Färben und Pflegen von Textilien, in der Lackpflege, wie z.B. für Autolacke.

Des weiteren können die erfindungsgemäßen Organopolysiloxane zum Einfärben von Organosilicumverbindungen aller Art verwendet werden, da durch die kovalente Anbindung des Farbstoffes an ein Siloxanmoleküle keine Unverträglichkeit gegenüber anderen Organosilicumverbindungen besteht. So können Siliconöle, vernetzbare Siliconkautschukmassen mit einem homogen verteilten, molekular vorliegenden Farbstoff eingefärbt werden, der nicht mehr extrahierbar ist.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

85 g eines aminopropylaminoethylfunktionalisierten, mit Trimethylsilylgruppen terminierten Siliconöles der in Tabelle 1 beschriebenen Art werden in einem Becherglas vorgelegt. Mit einem Ultra-Turrax dispergiert man 1,5 g 85 %-ige Ameisensäure 5 Minuten lang ein. Danach gibt man die in Tabelle 1 angegebene Menge Farbstoff jeweils gelöst in 5 g Wasser zu und arbeitet dies 15 Minuten lang mit dem Ultra-Turrax (Janke & Kunnel, IKA Labortechnik Ultra-Turrax T 50 1100W 10000 Umdrehungen/min) ein. Nach dem Abdestillieren des verbliebenen Restwassers werden farbige Siliconöle erhalten, die keinerlei Ausflockung oder Ausfällungen des Farbstoffes über Monate hinweg zeigen.

**Tabelle 1**

| Beispiel | Aminzahl des eingesetzten Aminöls | Viskosität des Aminöls [mm²/s] | eingesetzter Reaktivfarbstoff | Viskosität des farbigen Siloxanprodukts [mm²/s] | extrahierbarer^{a)} Farbstoff -anteil |
|---|---|---|---|---|---|
| 1a | 0,21 | 5500 | 0,785g Remazol schwarz GF® | 5470 | 2 ppm |
| 1b | 0,21 | 5500 | 0,785g Remazol Gelb GF® | 6100 | 5 ppm |
| 1c | 0,21 | 5500 | 3,14g Remazol Gelb GF® | 6830 | 12 ppm |
| 1d | 0,21 | 5500 | 0,785g Levafix brill. Rot® | 5940 | 3 ppm |
| 1e | 0,59 | 1230 | 2,24g Remazol Gelb GF® | 170000 | 7 ppm |
| 1f | 0,21 | 5500 | 0,393g Remazol Schwarz GF® 0,393g Remazol Gelb GF® | 7000 | 2 ppm |
| 1g | 0,23 | fest^{d)} | 0,936g Remazol Schwarz GF® | fest | < 0,1ppm |
| 1h | 11,58 | 3440 | 9,95^{b)} g Remazol Schwarz GF® | 38000 | wasserlöslich^{c)} |
| 1i | 11,58 | 3440 | 9,95^{b)}g Remazol Gelb GF® | 4400 | wasserlöslich |
| 1j | 11,58 | 3440 | 9,95^{b)} g Levafix brill. Rot® | 5870 | wasserlöslich |

| | | | | | |
|---|---|---|---|---|---|
| a) Zur Feststellung des extrahierbaren Farbstoffanteils wird jeweils 1 g des Reaktionsproduktes in 25 g eines oligomeren Siloxans gelöst und mit 42 g einer 20 Gew.-%igen Natriumchloridlösung ausgeschüttelt. Bei allen Proben ist kein auswaschbarer Anteil beim zweiten Ausschütteln in der wäßrigen Phase mit UV-Spektroskopie nachweisbar, d.h. der extrahierbare Farbstoffanteil ist kleiner 0,1 mg/1. | | | | | |
| b) in 10 g Wasser gelöst | | | | | |
| c) kein Extraktionsversuch mit Wasser | | | | | |
| d) 10-%ige Lösung in Toluol | | | | | |

In den Beispielen 1a, 1f, 1g und 1h wird als Farbstoff 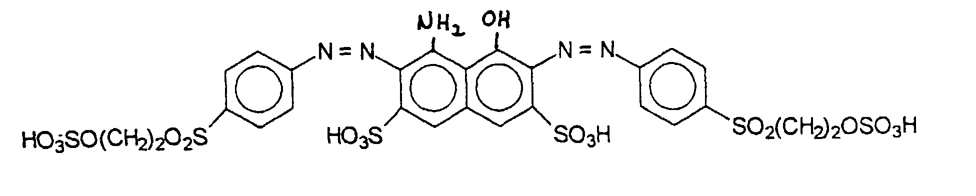 eingesetzt, welcher käuflich erhältlich ist unter dem Handelsnamen Remazol Schwarz GF® bei der Fa. Dye Stars, Darmstadt.

In den Beispielen 1b, 1c, 1e, 1f und 1i wird ein Sulfato-Vinylsulfonsäuregruppen aufweisender Farbstoff eingesetzt, welcher käuflich erhältlich ist unter dem Handelsnamen Remazol Gelb GF® bei der Fa. Dye Stars, Darmstadt.

In den Beispielen 1d und 1j wird als Farbstoff 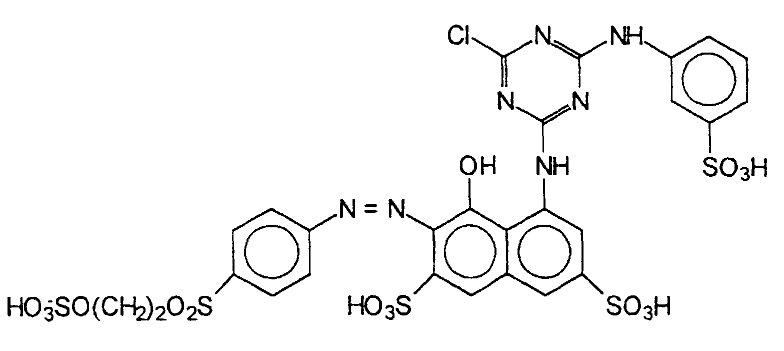 eingesetzt, welcher käuflich erhältlich ist unter dem Handelsnamen Levafix brill. Rot® bei der Fa. Dye Stars, Darmstadt.

### Beispiel 2

85 g eines mit Trimethylsilylgruppen terminierten, funktionalisierten Siliconöles der unten näher bezeichneten Art werden in einem Becherglas vorgelegt. Mit dem in Beispiel 1 beschriebenen Ultra-Turrax dispergiert man in den Beispielen 2a, 2b und 2e den Katalysator ca. 5 Minuten lang ein. Danach gibt man die in Tabelle 2 angegebene Menge Farbstoff jeweils gelöst in 5 g Wasser zu und arbeitet dies 15 Minuten mit dem Ultra-Turrax ein. Nach dem Abdestillieren des verbliebenen Restwassers werden farbige Siliconöle erhalten, die keinerlei Ausflockung oder Ausfällungen des Farbstoffes über Monate hinweg zeigen.

**Tabelle 2**

| Beispiel | eingesetztes Siliconöls | Viskosität des Siliconöls [mm²/s] | eingesetzter Reaktivfarbstoff | Viskosität des farbigen Silicon-produkts [mm²/s] | extrahierbarer^{a)} Farbstoff -anteil |
|---|---|---|---|---|---|
| 2a | A^{b)} | 5300 | 5,03 g Remazol Schwarz GF® | fest | < 0,1 ppm |
| 2b | B^{b)} | 158 | 3,0 g Remazol Schwarz GF® | | < 0,1 ppm |
| 2c | C | 840 | 0,85 g Remazol Schwarz GF® | 820 | < 0,1 ppm |
| 5 2d | D^{c)} | 150 | 14,4 g Remazol Schwarz GF® | fest | wasserlöslich |
| 2e | E^{b)} | 13600 | 3,0 g Remazol Schwarz GF® | 15600 | 15 ppm |

| | | | | | |
|---|---|---|---|---|---|
| a) Zur Feststellung des extrahierbaren Farbstoffanteils wird jeweils 1 g des Reaktionsproduktes in 25 g eines oligomeren Siloxans gelöst und mit 42 g einer 20 Gew.-%igen Natriumchloridlösung ausgeschüttelt. Bei allen Proben ist kein auswaschbarer Anteil beim zweiten Ausschütteln der farbigen Siliconöle mit UV-Spektroskopie nachweisbar, d.h. der extrahierbare Farbstoffanteil ist kleiner 0,1 mg/l. | | | | | |
| b) mit 1,5 g einer 85 %-iger Ameisensäure als Katalysator | | | | | |
| c) 50-%ige Lösung in Wasser | | | | | |

Der in Tabelle 2 angegebene Farbstoff ist in Beispiel 1 beschrieben und die Siloxane A-E im folgenden, wobei Me Methylrest bedeutet.

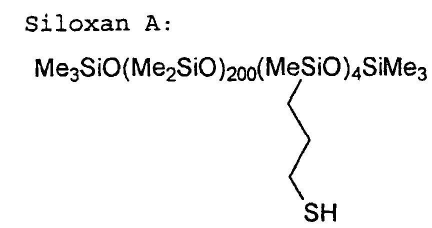

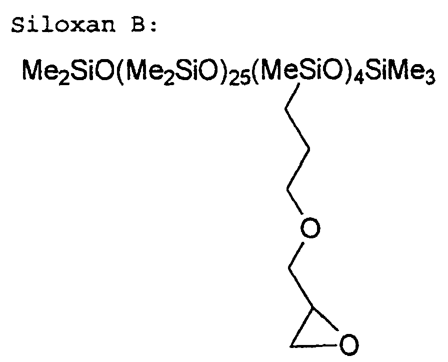

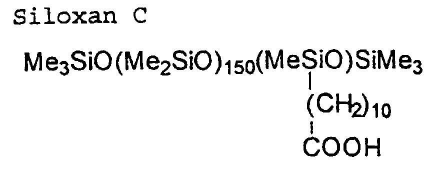

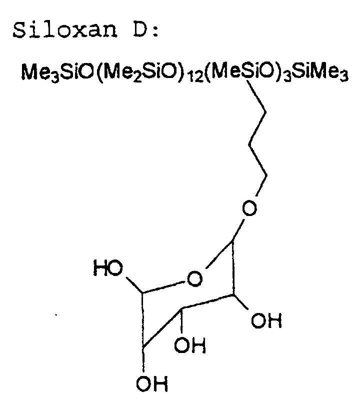

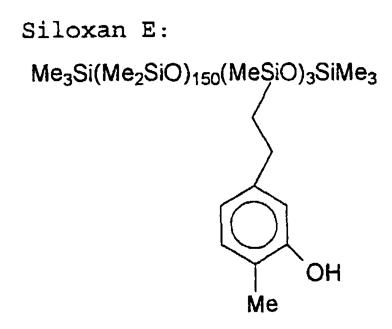

### Beispiel 3

100 g der verwendeten sauren Dispersion mit einem pH-Wert von 4,5 enthalten 2 Gew.-% Ameisensäure, 17 Gew.-% aminoethylaminopropylfunktionalisiertes Organopolysiloxan mit Trimethylsilylendgruppen und einer mittleren Kettenlänge von ca. 150 sowie der in Tabelle 3 angegebenen Aminzahl und ca. 10 Gew.-% ethoxylierte Fettsäure mit einer Kettenlängenverteilung zwischen 12 und 18 C-Atomen. Zu dieser Dispersion wird bei Raumtemperatur jeweils die in Tabelle 3 angegebene Menge Farbstoff jeweils gelöst in 5 g Wasser unter Rühren zugegeben. Die jeweils erhaltene Dispersion wird dann 7 Tage bei Raumtemperatur gelagert und anschließend mit 20-%iger Natriumchloridlösung gebrochen. Das so erhaltene isolierte, farbige Siliconöl wird noch 10 mal mit je 100 g 20-%iger NaCl-Lösung nachgewaschen. Der nicht mehr auswaschbare Restfarbstoffgehalt der Siliconöle wird dann mit UV-Vis-Messung bestimmt.

**Tabelle 3**

| Beispiel | Aminzahl des dispergierten Aminöles | eingesetzter Reaktivfarbstoff | Restfarbstoffgehalt relativ zum gesamt eingesetzten Farbstoff |
|---|---|---|---|
| 3a | 0,6 | 0,42 g Remazol Schwarz GF® | 95 % |
| 3b | 0,6 | 0,42 g Remazol Rot 3BS® | 92% |
| 3c | 0,6 | 0,42 g Remazol Gelb GF® | 93 % |
| 3d | 0,2 | 0,3 g Remazol Schwarz GF® | 97% |
| 3e | 0,2 | 0,3 g Remazol Rot 3BS® | 96% |
| 3f | 0,2 | 0,3 g Remazol Gelb GF® | 95% |

Der in den Beispielen 3a, 3c, 3f und 3d eingesetzten Farbstoffen sind in Beispiel 1 beschrieben.

In den Beispielen 3b und 3e wird ein dem Rest 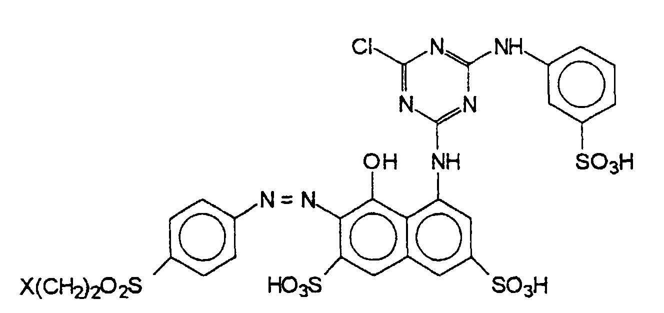 entsprechender Farbstoff eingesetzt, welcher käuflich erhältlich ist unter dem Handelsnamen Remazol Rot 3BS® bei der Fa. Dye Stars Darmstadt.

### Beispiel 4

1 g des in Beispiel 1 beschriebenen Farbstoffs, der käuflich erhältlich ist unter der Bezeichnung Levafix Brill.-Rot®, wird in 9 g Dimethylsulfoxid vorgelegt. Dazu gibt man eine Lösung von 8,5 g eines mit Trimethylsilylgruppen terminierten aminopropylaminoethylfunktionalisierten Siliconöls mit einer Aminzahl von 11,58 und einer Viskosität von 3440 mm²/s in 16 g Dimethylsulfoxid. Als Katalysator werden 0,128 g einer wäßrigen 85-%igen Ameisensäurelösung zudosiert.
Das Reaktionsgemisch wird für eine Stunde auf 80°C erwärmt. Anschließend destilliert man bei 80°C und Vollvakuum das Lösungsmittel ab. Es werden 9,2 g eines roten Siliconöles mit einer Viskosität von 12300 mm²/s erhalten, das wasserlöslich ist.

### Beispiel 5

In einem 2 Liter-Dreihalskolben werden bei Raumtemperatur 1122 g eines α,β-Dihydroxypolydimethylsiloxans mit einer mittleren Kettenlänge von 35, 78 g eines mit Trimethylsilylgruppen terminierten Polydimethylsiloxans mit einer mittleren Kettenlänge von ebenfalls 35 und 18,2 g eines auf einen pH-Wert von 7 eingestellten farbigen Siliconöls, dessen Herstellung in dem in Tabelle 4 angegebenen Beispiel beschrieben ist, vermischt. Nach der Zugabe des jeweiligen, in Tabelle 4 angegebenen Equilibrierungskatalysators werden die Reaktionen bei 80°C für vier Stunden durchgeführt. Nach der Desaktivierung des Katalysators durch Neutralisation werden die einzelnen Reaktionsgemische jeweils im Vollvakuum bei 80°C 2 Stunden lang ausgeheizt. Die Viskositäten der so erhaltenen farbigen Siloxane sind in Tabelle 4 aufgeführt.

**Tabelle 4**

| Beispiel | farbiges Siliconöl hergestellt gemäß Beispiel | eingesetzter Equilibrierungskatalysator | Viskosität des erhaltenen Produkts [mm²/s] |
|---|---|---|---|
| 5a | 2c | sauer; 150 ppm Phosphornitrilchlorid | 7400 |
| 5b | 1i | basisch; 1000 ppm Butyltrimethylammoniumhydroxid | 9300 |
| 5c | 1j | basisch; 1000 ppm Butyltrimethylammoniumhydroxid | 24000 |

Zur Feststellung des extrahierbaren Farbstoffanteils wird jeweils 1 g des Reaktionsproduktes in 25 g eines oligomeren Siloxans gelöst und mit 42 g einer 20 Gew.-%igen Natriumchloridlösung ausgeschüttelt.
Bei allen Proben ist der auswaschbare Anteil nicht mehr mit UV-Spektroskopie nachweisbar, d.h. der extrahierbare Farbstoffanteil ist kleiner 0,1 mg/l.

## Patentansprüche

1. Farbstoffreste aufweisende Organopolysiloxane enthaltend Einheiten der allgemeinen Formel
R¹ ₐ(RO)_{b}A_{c}R² _{d}SiO_{(4-a-b-c-d)/2} (I),
worin
R gleich oder verschieden sein kann und Wasserstoffatom oder einwertiger gegebenenfalls substituierter Kohlenwasserstoffrest bedeutet,
R¹ gleich oder verschieden sein kann und Wasserstoffatom oder einwertiger, SiC-gebundener Kohlenwasserstoffrest bedeutet,
R² gleich oder verschieden sein kann und substituierter einwertiger, SiC-gebundener Kohlenwasserstoffrest bedeutet,
A gleich oder verschieden sein kann und sulfonsäuren- und/oder sulfonatgruppenhaltiger, wasserlöslicher, organischer Farbstoffrest und/oder deren Komplexverbindung mit Metallen bedeutet,
a gleich 0, 1, 2 oder 3 ist,
b gleich 0, 1, 2 oder 3 ist,
d gleich 0, 1, 2 oder 3 ist und
c gleich 0, 1 oder 2 ist,
mit der Maßgabe, daß die Summe aus a, b, c und d kleiner oder gleich 3 ist, die Organopolysiloxane pro Molekül mindestens einen Rest A aufweisen und bei den Einheiten der Formel (I) mit c verschieden 0 d gleich 0 ist.

2. Farbstoffreste aufweisende Organopolysiloxane gemäß Anspruch 1, dadurch gekennzeichnet, daß sie aus Einheiten der Formel (I) bestehen.

3. Farbstoffreste aufweisende Organopolysiloxane gemäß Anspruch 1 oder 2, dadurch gekennzeichnet, daß es sich um solche der Formel (II)
R¹ ₃SiO(SiA₂O)ₑ(SiR¹ _{f}R² _{2-f}O)_{g}(R² ₘR¹ ₂₋ₘSiO)ₕ(R¹ ⱼAR² ₁₋ⱼSiO)ₖSiR¹ ₃
handelt, wobei
R¹, R² und A die oben angegebene Bedeutung haben,
f gleich 0 oder 1 ist,
j gleich 0 oder 1 ist,
m gleich 0, 1 oder 2,
e gleich 0 oder eine ganze Zahl von 1 bis 100 ist,
g gleich 0 oder eine ganze Zahl von 1 bis 100 ist,
h gleich 0 oder eine ganze Zahl von 1 bis 1000 ist und
k gleich eine ganze Zahl von 1 bis 100 ist,
mit der Maßgabe, daß (e+g)<(h+k)/10 ist und die in Formel (II) angegebenen Einheiten statistisch im Siloxanmolekül verteilt sein können.

4. Farbstoffreste aufweisende Organopolysiloxane gemäß einem oder mehreren der Ansprüche 1 bis 3, dadurch gekennzeichnet, daß der Farbstoffgehalt 0,1 bis 80 Gewichtsprozent, bezogen auf das Gesamtgewicht, beträgt.

5. Verfahren zur Herstellung von Farbstoffreste aufweisenden Organopolysiloxanen, dadurch gekennzeichnet, daß sulfonsäuren- und/oder sulfonatgruppenhaltige, wasserlösliche, organische Farbstoffe und/oder deren Komplexverbindung mit Metallen mit kovalent an das Farbstoffmolekül angebundenen reaktiven Gruppen, ausgewählt aus der Gruppe bestehend aus halogenierten Triazinresten oder Resten der Formel -SO₂-(CH₂)₂-V mit V gleich Halogen-, Sulfato- oder Thiosulfatorest sowie deren während der Reaktion gegebenenfalls entstehenden Zwischenprodukte mit Amino-, Carboxy-, Mercapto-, Anhydrid-, prim-, sek- , tert-Carbinol-, Glycosido-, Phenol-, Epoxid-, Aldehyd-, Polyglykol-, Phosphonato-, Silalacton-, Acrylat- und/oder Methacrylatgruppen aufweisenden Organopolysiloxanen umgesetzt werden.

6. Verfahren nach Anspruch 5, dadurch gekennzeichnet, daß es sich um eine Zwei-Phasen-Reaktion mit mechanischem Energieeintrag zur Homogenisierung handelt.

7. Verfahren nach Anspruch 5, dadurch gekennzeichnet, daß es sich um eine Zwei-Phasen-Reaktion handelt, bei der das erfindungsgemäß eingesetzte Siloxan in Form einer Dispersion vorliegt.

8. Verfahren nach Anspruch 5, dadurch gekennzeichnet, daß es sich um eine Ein-Phasen-Reaktion handelt.

## Claims

1. Organopolysiloxanes with dye radicals, comprising units of the general formula
R¹ ₐ(RO)_{b}A_{c}R² _{d}SiO_{(4-a-b-c-d)/2} (I),
in which
R can be identical or different and is hydrogen atom or monovalent, substituted or unsubstituted hydrocarbon radical,
R¹ can be identical or different and is hydrogen atom or monovalent, SiC-bonded hydrocarbon radical,
R² can be identical or different and is substituted, monovalent, SiC-bonded hydrocarbon radical,
A can be identical or different and is the radical of a water-soluble organic dye, containing sulphonic acid groups and/or sulphonate groups, and/or of its complex compound with metals,
a is 0, 1, 2 or 3,
b is 0, 1, 2 or 3,
d is 0, 1, 2 or 3, and
c is 0, 1 or 2,
with the proviso that the sum of a, b, c and d is less than or equal to 3, the organopolysiloxanes have at least one radical A per molecule, and, in the units of the formula (I) where c is other than 0, d is 0.

2. Organopolysiloxanes with dye radicals according to Claim 1, characterized in that they consist of units of the formula (I).

3. Organopolysiloxanes with dye radicals according to Claim 1 or 2, characterized in that they are of the formula (II)
R¹ ₃SiO(SiA₂O)ₑ(SiR¹ _{f}R² _{2-f}O)_{g}(R² ₘR¹ ₂₋ₘSiO)ₕ(R¹ ⱼAR² ₁₋ⱼSiO)ₖSiR¹ ₃
in which
R¹, R² and A are as defined above,
f is 0 or 1,
j is 0 or 1,
m is 0, 1 or 2,
e is 0 or an integer from 1 to 100,
g is 0 or an integer from 1 to 100,
h is 0 or an integer from 1 to 1000, and
k is an integer from 1 to 100,
with the proviso that (e+g)<(h+k)/10 and the units indicated in formula (II) can be distributed randomly in the siloxane molecule.

4. Organopolysiloxanes with dye radicals according to one or more of Claims 1 to 3, characterized in that the dye content is from 0.1 to 80 per cent by weight, based on the overall weight.

5. Process for preparing organopolysiloxanes with dye radicals, characterized in that water-soluble organic dyes containing sulphonic acid groups and/or sulphonate groups, and/or the complex compound of such dyes with metals, having reactive groups which are attached covalently to the dye molecule and are selected from the group consisting of halogenated triazine radicals or radicals of the formula -SO₂-(CH₂)₂-V where V is halo, sulphato or thiosulphato radical, and the intermediates thereof that may be formed during the reaction, are reacted with organopolysiloxanes which carry amino, carboxyl, mercapto, anhydride, primary, secondary or tertiary carbinol, glycosido, phenol, epoxy, aldehyde, polyglycol, phosphonato, silalactone, acrylate and/or methacrylate groups.

6. Process according to Claim 5, characterized in that the reaction is a two-phase reaction with mechanical energy input for homogenization.

7. Process according to Claim 5, characterized in that the reaction is a two-phase reaction where the siloxane employed in accordance with the invention is in the form of a dispersion.

8. Process according to Claim 5, characterized in that the reaction is a single-phase reaction.

## Revendications

1. Organopolysiloxanes présentant des radicaux de colorant, comprenant des unités de formule générale
R¹ ₐ(RO)_{b}A_{c}R² _{d}SiO_{(4-a-b-c-d)/2} (I)
dans laquelle
R peut être identique ou différent et signifie un atome d'hydrogène ou un radical hydrocarboné monovalent, le cas échéant substitué,
R¹ peut être identique ou différent et signifie un atome d'hydrogène ou un radical hydrocarboné monovalent, lié par SiC,
R² peut être identique ou différent et signifie un radical hydrocarboné monovalent, lié par SiC,
A peut être identique ou différent et signifie un radical de colorant organique, soluble dans l'eau, contenant des groupements acide sulfonique et/ou sulfonate et/ou son composé complexe avec des métaux,
a est égal à 0, 1, 2 ou 3,
b est égal à 0, 1, 2 ou 3,
d est égal à 0, 1, 2 ou 3 et
c est égal à 0, 1 ou 2,
sous réserve que la somme de a, b, c e soit inférieure ou égale à 3, que les organopolysiloxanes présentent au moins un radical A par molécule et que dans les unités de formule (I) dans lesquelles c est différent de 0, d soit égal à 0.

2. Organopolysiloxanes présentant des radicaux de colorant selon la revendication 1, caractérisés en ce qu'ils sont constitués d'unités de formule (I).

3. Organopolysiloxanes présentant des radicaux de colorant selon la revendication 1 ou 2, caractérisés en ce qu'il s'agit d'organopolysiloxanes de formule (II)
R¹ ₃SiO(SiA₂O)ₑ(SiR¹ _{f}R² _{2-f}O)_{g}(R² ₘR¹ ₂₋ₘSiO)ₕ(R¹ ⱼAR² ₁₋ⱼSiO)ₖSiR¹ ₃
où
R¹, R² et A ont la signification indiquée ci-dessus,
f est égal à 0 ou 1,
j est égal à 0 ou 1,
m est égal à 0, 1 ou 2,
e est égal à 0 ou un nombre entier de 1 à 100,
g est égal à 0 ou un nombre entier de 1 à 100,
h est égal à 0 ou un nombre entier de 1 à 1000 et
k est égal à un nombre entier de 1 à 100,
sous réserve que (e+g)<(h+k)/10 et que les unités indiquées dans la formule (II) puissent être réparties statistiquement dans la molécule de siloxane.

4. Organopolysiloxanes présentant des radicaux de colorant selon l'une ou plusieurs des revendications 1 à 3, caractérisés en ce que la teneur en colorant est de 0,1 à 80% en poids, par rapport au poids total.

5. Procédé pour la préparation d'organopolysiloxanes présentant des radicaux de colorant, caractérisé en ce qu'on transforme les colorants organiques, solubles dans l'eau, contenant des groupements acide sulfonique et/ou sulfonate et/ou leur composé complexe avec des métaux, comportant des groupements réactifs fixés par liaison covalente sur la molécule de colorant, choisis parmi le groupe constitué de radicaux triazines halogénisés ou de radicaux de formule -SO₂-(CH₂)₂-V, dans laquelle V est égal à radical halogène, sulfato ou thiosulfato, ainsi que leurs produits intermédiaires se formant le cas échéant pendant la réaction, avec des organopolysiloxanes présentant des groupements amino, carboxy, mercapto, anhydride, carbinol primaire, carbinol secondaire, carbinol tertiaire, glycosido, phénol, époxyde, aldéhyde, polyglycol, phosphonato, silalactone, acrylate et/ou méthacrylate.

6. Procédé selon la revendication 5, caractérisé en ce qu'il s'agit d'une réaction en deux phases, avec une introduction d'énergie mécanique à des fins d'homogénéisation.

7. Procédé selon la revendication 5, caractérisé en ce qu'il s'agit d'une réaction en deux phases, dans laquelle le siloxane utilisé selon l'invention se trouve sous forme d'une dispersion.

8. Procédé selon la revendication 5, caractérisé en ce qu'il s'agit d'une réaction en une phase.
